# EUROPEAN PATENT APPLICATION

(11) **EP 3 734 348 A1**
(43) Date of publication of application: **04.11.2020**
(21) Application number: 18895859.9
(22) Date of filing: 27.12.2018
(51) Int. Cl.: G02B 26/00, G02B 3/00, G02B 3/14, G02B 5/02, G02B 26/08, G03B 15/00

(54) **OPTICAL ELEMENT, AND METHOD FOR PRODUCING OPTICAL ELEMENT**

(30) Priority: 28.12.2017 JP 2017254352; 26.12.2018 JP 2018243599
(71) Applicant: Nitto Denko Corporation, Ibaraki-shi, Osaka 567-8680 (JP); Shinshu University, Matsumoto-shi, Nagano 390-8621 (JP)
(72) Inventor: YAMADA, Yasumi, Ibaraki-shi, Osaka 567-8680 (JP); HIRAI, Toshihiro, Ueda-shi, Nagano 386-8567 (JP)
(74) Representative: Müller-Boré & Partner Patentanwälte PartG mbB
(86) International application number: PCT/JP2018/048301
(87) International publication number: WO 2019/131933

(57) **Abstract**

An optical device that can adjust the optical characteristics by a simple structure and a fabrication method thereof are provided. The optical device (10A) has a first electrode layer (12A), a second electrode layer (14A), a polymer layer (11) provided between the first electrode layer (12A) and the second electrode layer (14A), and a spacer layer (13A) positioned between the polymer layer and the second electrode layer to provide a prescribed space (17) between the polymer layer (11) and the second electrode layer (14A), the spacer layer being an electrical insulator, wherein the polymer layer (11) deforms into one or more light scatterers (15) in the prescribed space by applying voltage.

## Description

### TECHNICAL FIELD

The present invention relates to an optical device, and a method of fabricating an optical device.

### BACKGROUND ART

Conventionally, a tunable lens system or a lens driving system in an optical axis direction using a polymer material deformable by applying an electric voltage is known. (See, for example, Patent Document 1 and Patent Document 2 presented below.) The polymer material is used as a lens holder to hold and move the lens along the optical axis, making use of expansion and contraction of the polymer material by applying a voltage.

A method of producing a convex or a concave lens by deforming electrodes and an organic material sandwiched between the electrodes is also known. (See, for example, Patent Document 3 presented below.) In this method, the dielectric elastomer material applied in the direction of the electric field, and a distribution is generated in the quantity of piezoelectric/electrostrictive distortion per unit electric-field, within a plane perpendicular to the direction of the electric field applied to the organic material.

For a flexible polymer actuator employed in an artificial muscle actuator, a gel material containing an ionic liquid of 1 to 30 parts by weight with respect to polyvinyl chloride of 1 to 50 parts by weight is known. (See, for example, Patent Document 4).

### PRIOR ART DOCUMENTS

Patent Document 1: Japan Patent No. 4530163
Patent Document 2: Japan Patent No. 5180117
Patent Document 3: Japan Patent No. 5029140
Patent Document 4: Japan Patent No. 5392660

### SUMMARY OF THE INVENTION

### [TECHNICAL PROBLEM TO BE SOLVED]

In the conventional configuration for moving the lens along the optical axis, the position of a single lens is shifted by expansion or contraction of the polymer material used as the lens holder. the lens position changes by firstly deforming the holder. It is difficult for this configuration to satisfactorily enhance the response and accuracy for lens driving.

For the distribution of piezoelectric/electrostrictive distortion within a plane of the organic material layer, materials with different characteristics are produced by applying little by little onto predetermined positions by ink-jet or microcontact printing. Thus, the fabrication process of the lens is complex and time consuming.

The device as described almost are for a single lens. Meanwhile, in recent years, there is an increasing demand for microlens arrays with a large number of minute lenses, which can be used in imaging and video-related products. Providing a focus adjusting function to a microlens array may provide additional value to microlens arrays.

Given the above-described technical problems, the present disclosure provides an optical device capable of adjusting optical characteristics with a simple structure, and a fabrication method thereof.

### [TECHNICAL SOLUTIONS]

In the present disclosure, an optical device capable of controlling focusing or diffusion of light is provided, making use of expansion/contraction or deformation of a polymer material by applying a voltage.

In a first aspect, an optical device has
a first electrode layer,
a second electrode layer,
a polymer layer provided between the first electrode layer and the second electrode layer, and
a spacer layer positioned between the polymer layer and the second electrode layer to provide a prescribed space between the polymer layer and the second electrode layer, the spacer layer being an electrical insulator,
wherein the polymer layer deforms into one or more light scatterers in the prescribed space by applying a voltage.

In a second aspect, a method of fabricating an optical device includes
providing a polymer layer on a first electrode layer,
providing a spacer layer and a second electrode layer on or above the polymer layer so as to provide a space between the polymer layer and the second electrode layer, the spacer layer being an electrical insulator, and
applying a voltage between the first electrode layer and the second electrode layer to produce one or more light scatterers in the space by deforming the polymer layer.

### [ADVANTAGEOUS EFFECT OF THE INVENTION]

With the above-described configuration and method, an optical device whose optical characteristic is adjustable with a simple structure and a fabrication method thereof are achieved.

### BRIEF DESCRIPTION OF THE DRAWINGS

FIG. 1 is a schematic diagram illustrating a basic structure of an optical device according to an embodiment;
FIG. 2 is a diagram illustrating a basic operation of the optical device according to an embodiment;
FIG. 3 is a schematic diagram of a microlens array formed by a plurality of light scatterers in the optical device of the embodiment;
FIG. 4 is a cross-sectional view taken along the X-X' line of FIG. 3;
FIG. 5A illustrates a fabrication process of an optical device having a plurality of light scatterers;
FIG. 5B illustrates a fabrication process of an optical device having a plurality of light scatterers;
FIG. 5C illustrates a fabrication process of an optical device having a plurality of light scatterers;
FIG. 6 shows 3D images demonstrating a deformation process of the optical device of the embodiment;
FIG. 7 illustrates a cross-sectional profile of the optical device (i.e., microlens array) of FIG. 6 as a function of voltage;
FIG. 8 illustrates a variation of the optical device and its behavior;
FIG. 9 is a schematic diagram of an imaging device using the optical device of the embodiment;
FIG. 10 is a schematic diagram of lighting equipment using the optical device of the embodiment;
FIG. 11 is a schematic diagram of a sample device used for measuring characteristics of a polymer material with an ionic liquid
FIG. 12 illustrates response characteristics of a polymer layer with various types of ionic liquids added;
FIG. 13 illustrates physical properties of the various types of ionic liquids and deformation of polymer gel containing the ionic liquids;
FIG. 14 illustrates the relation between the amount of ionic liquid added and the deformation of polymer gel;
FIG. 15 illustrates evaluation results of light scatterers formed by applying a voltage at different amounts of an ionic liquid added; and
FIG. 16 illustrates deterioration of electrodes by various ionic liquids.

### BEST MODE FOR IMPLEMENTING THE INVENTIONS

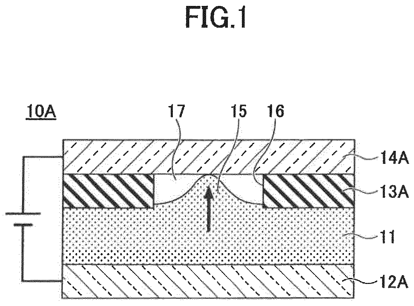

FIG. 1 illustrate a basic configuration of an optical device 10A, which is an example of the optical device 10 of an embodiment. The optical device 10A has a first electrode layer 12A, a second electrode layer 14A, a polymer layer 11 provided between the first electrode layer 12A and the second electrode layer 14A. and a spacer layer 13A provided between the polymer layer 11 and the second electrode layer 14A. The spacer layer 13A has an aperture 16 formed in a predetermined pattern, and a space 17 is provided between the polymer layer 11 and the second electrode layer 14A at the position of the space 17.

The polymer layer 11 elastically deforms under application of a voltage and forms a light scatterer 15 in the space 17. The light scatterer 15 has a protrusion shape, as will be described below.

The spacer layer 13A may be made of any material as long as it is electrically insulating. It may be either an inorganic insulating film or an organic insulating film. In the example of FIG. 1, the spacer layer 13A is an insulating resin film having a predetermined pattern of an aperture 16. The plane shape and size of the aperture 16 are appropriately designed depending on the volume of the space 17 and the shape of the light scatterer 15 produced in the space 17. For example, a round, elliptical, polygonal or other shape may be employed.

The diameter of the aperture 16 of the spacer layer 13A is, for example, less than 1 mm, preferably 300 µm or less. When the diameter of the aperture 16 is 1 mm or more, it may become difficult for the polymer layer 11 to protrude into the aperture 16 under application of a voltage. When the diameter of the aperture 16 is set to 300 µm or less, the deformation of the polymer layer 11 the protrusion shape can be easily produced.

The polymer layer 11 and the light-scatterer 15 are made of a gel of a polymer material (which may be referred to as "polymer gel"). The light scatterer 15 is formed making use of expansion/contraction or elastic deformation of the polymer gel by applying a voltage

The polymer gel may be polyvinyl chloride (PVC), polymethylmethacrylate (PMMA), polyurethane (PU), polystyrene (PSt), polyvinyl acetate (PVAc), polyvinyl alcohol (PVA), polycarbonate (PC), polyethylene terephthalate (PET), polyacrylonitrile(PAN), silicone rubber(SR), or the like. Any suitable polymer (or resin) material transparent to the wavelength used may be appropriately selected.

In the embodiment, PVC, which can deform greatly by the electrostrictive effect and is easy to handle, is used. A suitable plasticizer may be added to PVC, or PVC may be dissolved in a solvent. When a plasticizer is used, dibutyl adipate (DBA), diethyl adipate (DEA), dioctyl adipate (DOA), diethyl sebacate (DES), dioctyl phthalate (DOP), diethyl phthalate (DEP), and tributyl acetyl citrate (TABC), and so on. may be used. For the solvent, tetrahydrofuran (THF) or the like may be used.

The mixing ratio of the plasticizer is 50 wt% or more, preferably 75 wt% or more. When the mixing ratio is less than 50 wt%, it may be difficult for the polymer layer 11 to deform even with voltage application. With the mixing ratio of 50 wt% or more and less than 75 wt%, the polymer layer 11 can deform by applying a voltage; however, the applied voltage amount may be high. By setting the mixing ratio of plasticizer to 75 wt% or more, the polymer layer 11 can deform easily at an appropriate voltage amount.

The material of the first electrode layer 12 is not limited as long as it has electrical conductivity. When the first electrode layer 12 is made of a metal, platinum, gold, silver, nickel, chromium, copper, titanium, tantalum, indium, palladium, lithium, niobium, stainless steel or an alloy thereof may be used. The first electrode layer 12 may also be made of a transparent oxide semiconductor material such as indium tin oxide (ITO), or alternatively, a conductive polymer, conductive carbon, or the like.

The second electrode layer 14A is preferably a transparent electrode. By designing the second electrode layer 14A as the transparent electrode, the light focused or diffused by the light scatterer 15 can be transmitted through it.

The polarities of the first electrode layer 12 and the second electrode layer 14A may be selected depending on which direction the polymer layer 11 is to be deformed. In the example of FIG. 1, the polymer layer 11 tends to be negatively charged, the first electrode layer 12 is a cathode, and the second electrode layer 14A is an anode.

A part of the anode-side surface of the polymer layer 11 may be in surface contact with the spacer layer 13A. The polymer layer 11 deforms under application of a voltage at an area not in surface contact with the spacer layer 13A (namely, an area exposed in the aperture 16) and is pulled up toward the second electrode layer 14A.

The optical device 10A may be fabricated by the following steps. A solution of PVC with a plasticizer is applied by casting or any other suitable process onto the first electrode layer 12 to form the polymer layer 11. Then the spacer layer 13A with a pattern of the aperture 16 formed in advance and the second electrode layer 14A are provided over the polymer layer 11. The spacer layer 13A and the second electrode layer 14A may be provided simultaneously or one by one.

Then a predetermined voltage is applied between the first electrode layer 12 and the second electrode layer 14A to produce the light scatterer 15 in the space 17 formed in the aperture 16.

The thickness of the polymer layer 11 is determined according to the diameter and the depth of the aperture 16, the height of the light scatterer 15 to be formed, the thicknesses of the first electrode layer 12 and the second electrode layer 14A, or other factors. For example, the thickness of the polymer layer 11 is 1 mm or less, and preferably from 0.1 mm to 0.5 mm. When the thickness of the polymer layer 11 is 0.1 mm or less, handling may become slightly difficult. However, there may be tradeoff with respect to the size of the aperture 16. When a microlens array sheet having a large number of fine lenses is fabricated, the thickness of the polymer layer 11 may be 0.1 mm or less. The thickness of the spacer layer 13 is 1 mm or less, and preferably, 0.1 mm or less.

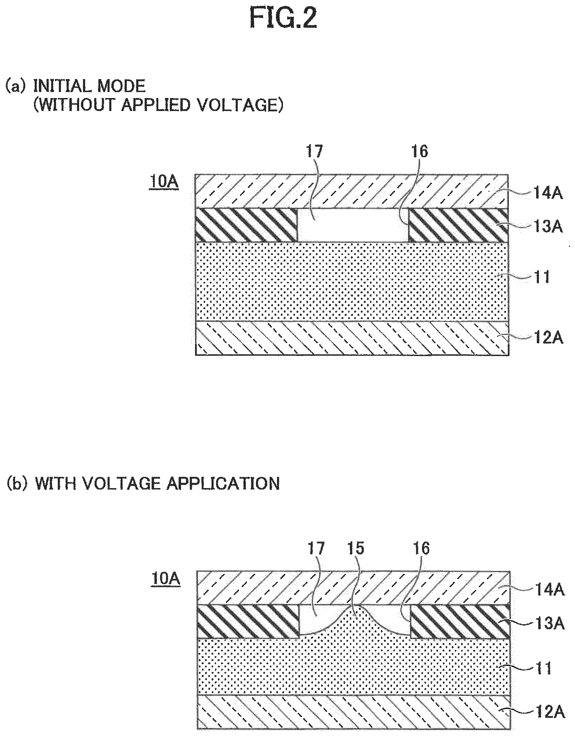

FIG. 2 illustrates a basic operation of the optical device 10A according to an embodiment. Diagram (a) of FIG. 2 shows the initial state in which no voltage is applied, and diagram (b) shows a state in which a voltage is applied.

In the state of FIG. 2 (a), the polymer layer 11 may have a flat surface and is located between the first electrode layer 12 and the second electrode layer 14A. Since the spacer layer 13A is provided between the polymer layer 11 and the second electrode layer 14A, a part of the polymer layer 11 is in surface contact with the spacer layer 13A. At the position of the aperture 16 formed in the spacer layer 13A, a space 17 is formed between the polymer layer 11 and the second electrode layer 14A.

As illustrated in FIG. 2 (b), when a voltage is applied between the first electrode layer 12 and the second electrode layer 14A, electrons are supplied to the gel-like polymer layer 11 from the first electrode layer 12 serving as the cathode. The polymer gel containing electrons is pulled up toward the surface of the second electrode layer 14A serving as the anode. On the other hand, the spacer layer 13A is insulating, and the polymer gel is predominantly pulled toward the second electrode layer 14A at the center area of the aperture 16, rather than near the sidewall of the aperture 16, whereby a light scatterer 15 is produced.

The polymer layer 11 deforms based upon the elasticity and the electrostrictive effect of the gel, and a protrusion-shaped light scatterer 15 is formed about the center axis of the aperture 16. When the composition of the polymer layer 11 and the shape of the aperture 16 are uniform, a protrusion with less variation may be formed as the light scatterer 15 by applying the same voltage.

Since the total volume of the polymer gel is unchanged, the thickness of the polymer layer 11 may slightly decrease as the polymer gel is pulled up in the aperture 16. As the thickness of the polymer 11 decreases, the height positions of the spacer layer 13A being in surface contact with the polymer layer 11 and the second electrode layer 14A supported by the spacer layer 13A may also lower.

Deformation of the polymer layer 11 is reversible, and the optical device 10A can return to the initial state (a) of FIG. 2 by turning off the voltage. Furthermore, as will be described later, the height of the light scatterer 15 can be adjusted according to the amount of the voltage applied.

The number of apertures 16 formed in the spacer layer 13A is not limited to one. By forming a plurality of apertures 16 in the spacer layer 13A, a plurality of light scatterers 15 can be produced by voltage application to deform the polymer layer 11. Again, when the composition of the polymer layer 11 and the shape of the plurality of apertures 16 are uniform, multiple light scatterers 15 can be simultaneously formed in a uniform shape by applying a voltage.

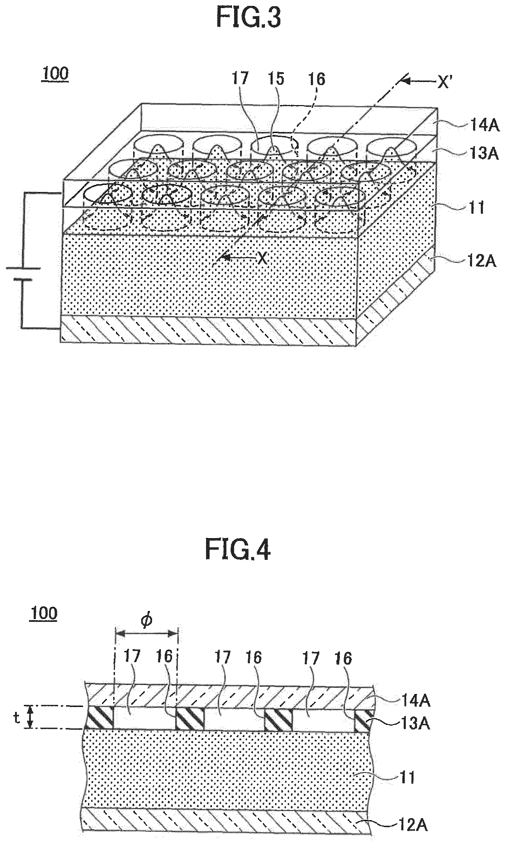

FIG. 3 is a schematic diagram of a microlens array 100 obtained by forming a plurality of light scatterers 15 in the optical device 10A. The microlens array 100 has a first electrode layer 12A, a second electrode layer 14A, a polymer layer 11 provided between the first electrode layer 12A and the second electrode layer 14A, and a spacer layer 13A inserted between the polymer layer 11 and the second electrode layer 14A. In the example of FIG. 3, both the first electrode layer 12A and the second electrode layer 14A are transparent electrodes.

A plurality of apertures 16 are formed in the spacer layer 13A. When a voltage is applied between the first electrode layer 12A and the second electrode layer 14A, the polymer layer 11 deforms and light scatterers 15 are produced in the respective apertures 16.

The first electrode layer 12A is a cathode layer and the second electrode layer 14A is an anode layer. An array of light scatterers 15 is formed on the anode-side surface of the polymer layer 11. As an example, the thickness of the polymer layer 11 is 500 µm, the diameter of the light scatterer 15 at the bottom is 150 µm, the height is 50 µm, and the center-to-center distance (or the pitch) of the light scatterers 15 is 200 µm.

The polymer layer 11 is formed of a polymer gel such as PVC, polymethylmethacrylate, polyurethane, polystyrene, polyvinyl acetate, polyvinyl alcohol, polycarbonate, polyethylene terephthalate, polyacrylonitrile, silicone rubber, or the like. A plasticizer such as DBA, DEA, DOA, DES, DOP, TBAC, or DEP may be added to the polymer gel. The mixing ratio of the plasticizer is 50 wt% or more, and more preferably, 75 wt% or more.

The light scatterers 15 of the microlens array 100 are produced based upon deformation of the polymer layer 11 being electrically attracted to the second electrode layer 14A in the inner spaces of the apertures 16. The light scatterers 15 are present as uniform protrusions at the surface of the polymer layer 11.

As has been described above with reference to FIG. 2, depending on the voltage amount applied between the first electrode layer 12A and the second electrode layer 14A, presence and/or the height of the light scatterers 15 can be controlled.

FIG. 4 is a cross-sectional view taken along the X-X' line of FIG. 3 without voltage application. The surface of the polymer layer 11 is flat between the first electrode layer 12A and the second electrode layer 14A. A part of the surface of the polymer layer 11 is in surface contact with the spacer layer 13A, and the other area is open to the space 17 in the aperture 16 formed in the spacer layer 13A. The diameter ϕ of the aperture 16 is 150 um, and the thickness of the spacer layer 13A is 30 µm.

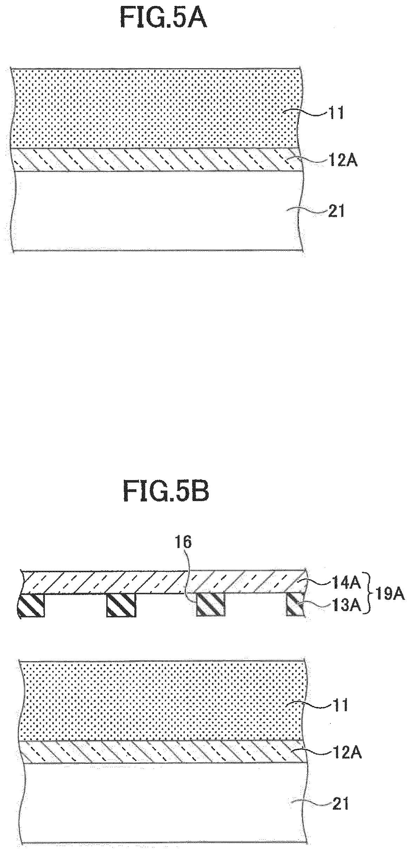

FIG. 5A to FIG. 5D illustrate a fabrication process of the microlens array 100 which is an example of the optical device having a plurality of light scatterers 15. In FIG. 5A, a first electrode layer 12A is formed on a substrate 21, and a polymer layer 11 is formed over the first electrode layer 12A. The first electrode layer 12A is, for example, a 100 µm thick ITO film. For the polymer layer 11, dibutyl adipate (DBA) is added to PVC so that the mixing ratio is 80 wt%, and the mixture is completely dissolved in a THF solvent to acquire a gel solution. Then the gel solution is cast on the first electrode layer 12A at a thickness of 500 µm. DBA used as the plasticizer tends to carry negative ions, and the polymer gel is attracted to the anode by applying a voltage.

In FIG. 5B, a spacer layer 13A with a plurality of apertures 16 formed therein and a second electrode layer 14A are provided on or above the polymer layer 11. The spacer layer 13A is, for example, a polyimide film with a thickness of 30 µm. The second electrode layer 14A is an ITO film with a thickness of 100 µm. In this example, the spacer layer 13A and the second electrode layer 14A are bonded to each other in advance to form an electrode assembly 19A. The electrode assembly 19A may be supported on a substrate not illustrated in the figure.

In the spacer layer 13A, 30×30 apertures 16 each having a diameter of 150 µm are arranged in a matrix. The pitch P of the apertures 16 is 200 µm, and the gap between adjacent apertures 16 is 50 µm.

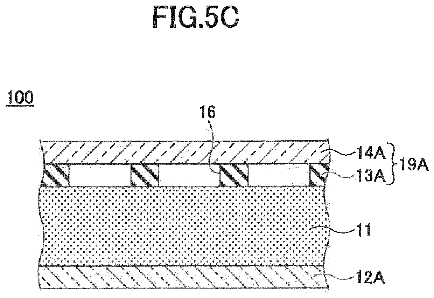

In FIG. 5C, the substrate 21 is removed and a thin-film microlens array 100 is completed. By applying a voltage of a desired amount between the first electrode layer 12A and the second electrode layer 14A, light scatterers 15 are produced in the apertures 16.

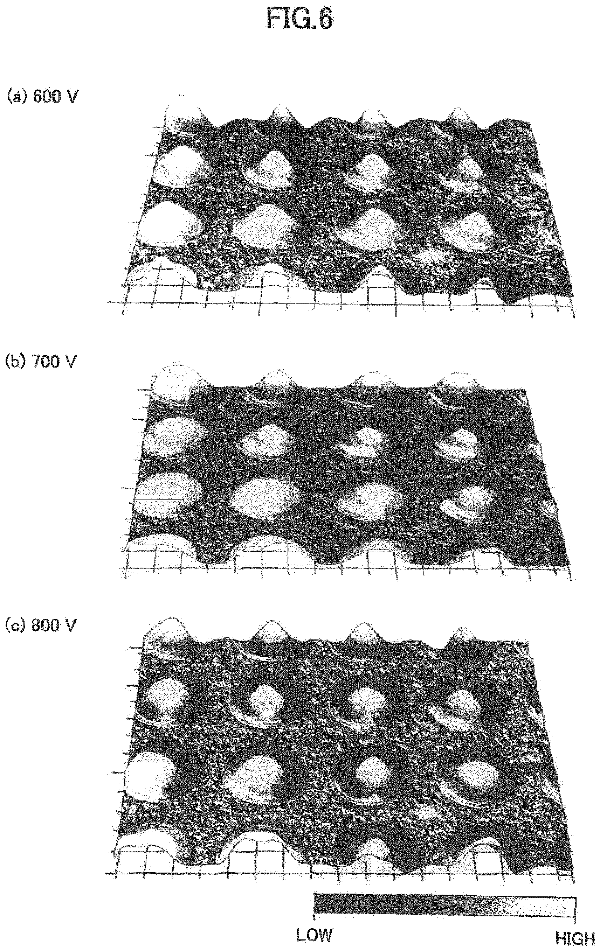

FIG. 6 shows 3D images observed while the voltage amount applied to the optical device 10 having a plurality of light scatterers 15 is varied. The 3D observation was utilized a digital microscope VHX1000 manufactured by Keyence Corporation.

Image (a) of FIG. 6 is observed at applied voltage of 600 V, image (b) of FIG. 6 is observed at applied voltage of 700 V, and image (c) of FIG. 6 is observed at applied voltage of 800 V. It can be clearly seen that the polymer gel is pulled up from the center area of the apertures by applying the voltages.

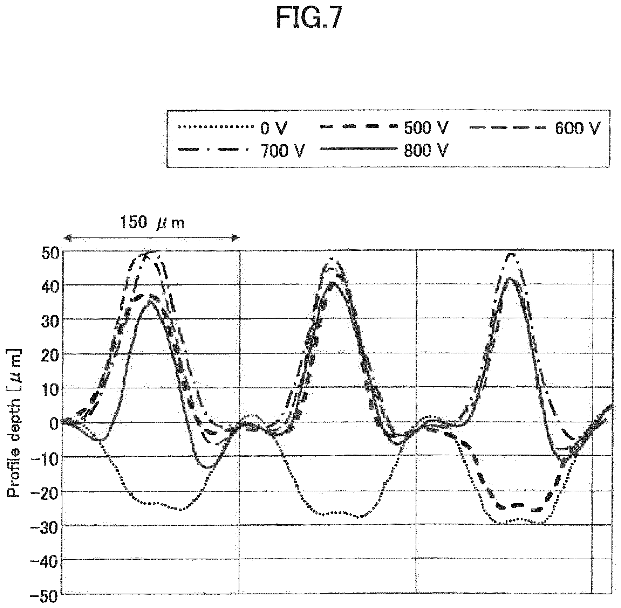

FIG. 7 is a diagram plotting the heights of three consecutive light scatterers 15 as a function of applied voltage based upon the 3D images of FIG. 6. The vertical axis represents the height from the top surface of the polymer layer 11 in the initial state (without applying a voltage), the horizontal axis represents in-plane position of the aperture 16 in the spacer layer 13A, and one grid spacing is 150 µm.

Without voltage application (at 0 V), the height position of the polymer layer 11 inside the aperture is measured as about -20 µm). This is due to error (about ±20 µm) in the optical measurement in the depth direction in which light does not enter easily, and the actual profile of the polymer layer 11 is flat in the aperture 16.

At applied voltage of 500 V, the polymer gel is greatly protruded at the center axis of the aperture 16. At the voltage amount of 600 V and 700 V, the peak height is further increased. At this amount, the height of the light scatterers 15 reaches 50 µm. At voltage application of 800 V, the peak height is slightly reduced, but the steepness increases due to decreasing the width of the profile. The radius of curvature near the peak becomes smaller.

As shown in the profile of FIG. 7, by adjusting the voltage amount applied to the optical device 10 (or the microlens array 100), a desired lens shape can be provided to the optical element 10 (or the microlens array 100).

Even at applied voltage of 800 V, the electric current flowing through the polymer gel is only 10 microamperes (µA) or less, thus the device barely generates the Joule heating. The microlens can withstand long-term use.

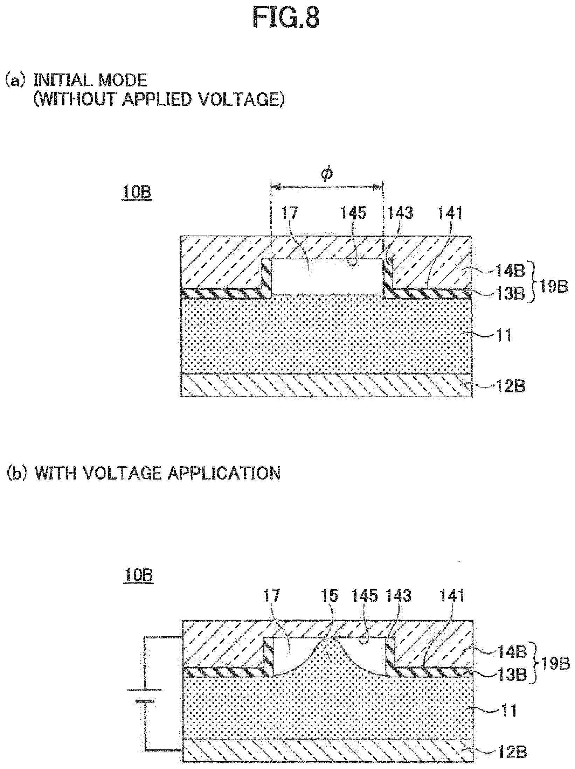

FIG. 8 is a schematic diagram of an optical device 10B which is a variation of the embodiment. In the above-described embodiment, the insulating spacer layer 13A having apertures 16 is bonded to the flat second electrode layer 14A. In this variation, an aperture 143 is formed in the main surface 141 of the second electrode layer 14B, which faces the polymer layer 11. The main surface 141 and the sidewall of the aperture 143 are covered with an insulating spacer layer 13B. The bottom 145 of the aperture 143 is uncovered with the spacer layer 13B.

The second electrode layer 14B having the aperture 143, and the spacer layer 13B may be integrally formed as an electrode assembly 19B. The aperture 143 can be shaped into a desired shape by wet etching or dry etching. The plane shape of the aperture 143 may be round, elliptical, polygonal, etc. with a predetermined diameter.

An insulating spacer layer 13B may be formed in the entirety of the main surface 141 of the second electrode layer 14B in which the aperture 143 is formed, and the spacer layer 13B covering the bottom 145 of the aperture 143 may be removed by photolithography and etching to expose the second electrode layer 14B within the aperture 143. By the sidewall of the aperture 143 covered with the spacer layer 13, a predetermined space 17 is formed between the second electrode layer 14B and the polymer layer 11.

As shown in diagram (a) of FIG. 8, the top surface of the polymer layer 11 is flat inside the space 17 without applying a voltage. In the area except for the aperture 143, the polymer layer 11 is in surface contact with the spacer layer 13B.

As shown in diagram (b) of FIG. 8, by applying a voltage between the first electrode layer 12B and the second electrode layer 14B, the polymer layer 11 deforms to be pulled predominantly from the center area in the aperture 143 toward the second electrode layer 14B. A protrusion of light scatterer 15 is created in the space 17.

The optical device 10B of FIG. 8 is also applicable to a microlens array by providing a plurality of light scatterers 15. In this case, a number of apertures 143 are formed in the second electrode layer 14B, and the spacer layer 13B is formed over the entire surface including the apertures. Then the spacer layer 13 is partially removed from the bottoms of the apertures 143. When a voltage is applied, uniformly shaped light scatterers 15 can be formed inside the respective apertures 143.

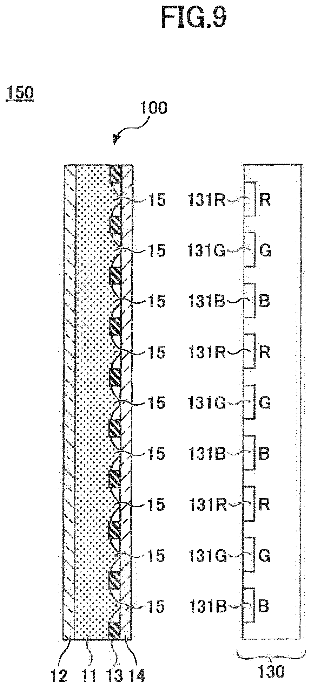

FIG. 9 is a schematic diagram of an imaging apparatus 150 using the microlens array 100 of the embodiment. For the microlens array 100, either the optical device 10A of the embodiment or the optical device 10B of the variation may be used. In the example of FIG. 9, the configuration of the optical device 10A is employed for the microlens array 100, in which the first electrode layer 12, the polymer layer 11, the spacer layer 13, and the second electrode layer 14 are laminated.

The imaging apparatus 150 has a microlens array 100 with a plurality of light scatterers 15, and an image sensor array 130 with a plurality of image sensors. The respective image sensors may be charge coupled devices (CCDs), complementary metal oxide semiconductor (CMOS) sensors, or the like. Color filters 131 of three colors may be provided corresponding to the layout of the image sensors. In this example, red (R), green (G), and blue (B) color filters 131R, 131G, and 131B are alternately arranged.

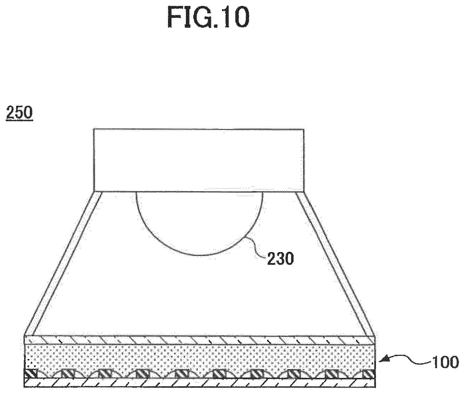

FIG. 10 shows a schematic diagram of lighting equipment 250 using the microlens array 100 of the embodiment. The lighting equipment 250 has a light source 230 such as an LED lamp and the microlens array 100 provided at the light output side of the light source 230. For the microlens array 100, either the optical device 10A of the embodiment or the optical device 10B of the variation may be used. In the example of FIG. 9, the configuration of the optical device 10A is employed for the microlens array 100, in which the first electrode layer 12, the polymer layer 11, the spacer layer 13, and the second electrode layer 14 are laminated.

By applying a voltage, light scatterers 15 with a desired form are formed in the spaces defined by the spacer layer 13. Light diffusion is controllable to be converted into parallel light while maintaining high brightness.

In addition to the applications of FIG. 9 and FIG. 10, the optical devices 10A and 10B can be applied to optical microscopes, illumination devices for industrial use, or the like.

The microlens array 100 is assembled into a laminate as thin as 1 mm or less, and both the anode and the cathode can be made transparent. Such a microlens array 100 is applied to the medical field such as an endoscope system, in addition to applications to an ultra-thin camera, a head mounted display (HMD), a microlens array (MLA) sheet, or the like. An optical device 10 with a single light scatterer 15 can also be applied to a light diffusion sheet, a lens sheet, etc. in the fields of medical treatment and imaging technologies.

### <Structure of Polymer Material>

As has been described above, the optical device and the microlens array of the embodiment generate the light scatterer(s) having various light distributions simply by switching ON and OFF of a voltage or turning the voltage amount, without a complicated mechanism. The lower the required voltage amount, the more desirable for the device. To reduce the voltage amount, appropriate composition of the polymer material used for the optical device and the microlens array is studied below.

Particularly, an ionic liquid that satisfies predetermined conditions is added to a gel of the polymer material ("polymer gel") used for the polymer layer 11, thereby reducing the driving voltage of the optical device 10 or the microlens array 100. By adding the ionic liquid, the efficiency of deformation of the polymer material is improved.

Ionic liquid is a salt composed of cations (positively charged ions) and anions (negatively charged ions), and is in the liquid phase at 25°C. One of the predetermined conditions is that the ionic liquid has an anion (negative ion) transference number equal to or higher than a certain value at 25°C. Details of this condition are explained later.

The polymer material is polyvinyl chloride (PVC), PMMA, PU, PST, PVAc, PVA, PC, PET, PAN, SR, or the like, as has already been explained. In a preferred configuration, a polymer or resin material transparent with respect to the target wavelength is used.

The weight ratio of the ionic liquid to the above-described polymer material is greater than or equal to 0.2 wt% and less than or equal to 1.5 wt%, and more preferably, greater than or equal to 0.3 wt% and less than or equal to 1.0 wt%. Assuming that the weight of the polymer material is 1 (or 100%), by mixing the above-described weight ratio of the ionic liquid into the polymer material, the driving voltage of the optical device or the microlens array can be reduced. The reasoning for this is also described later.

A suitable plasticizer may be added to the polymer gel or such polymer gel may be dissolved in a solvent. For the plasticizer, DBA, DEA, DOA, DES, DOP, TBAC, DEP, and so on can be used. As the solvent, an ether solvent such as tetrahydrofuran (THF) may be used.

The polymer material with an ionic liquid can be used in any one of the optical device 10A of FIG. 1, the optical device 10B of FIG. 2, and the microlens array 100 of FIG. 3. As will be described in detail below, the driving voltage of the polymer layer 11 can be reduced to 200 V or less, more preferably 150 V or less, by adding an ionic liquid satisfying a predetermined condition to the polymer material.

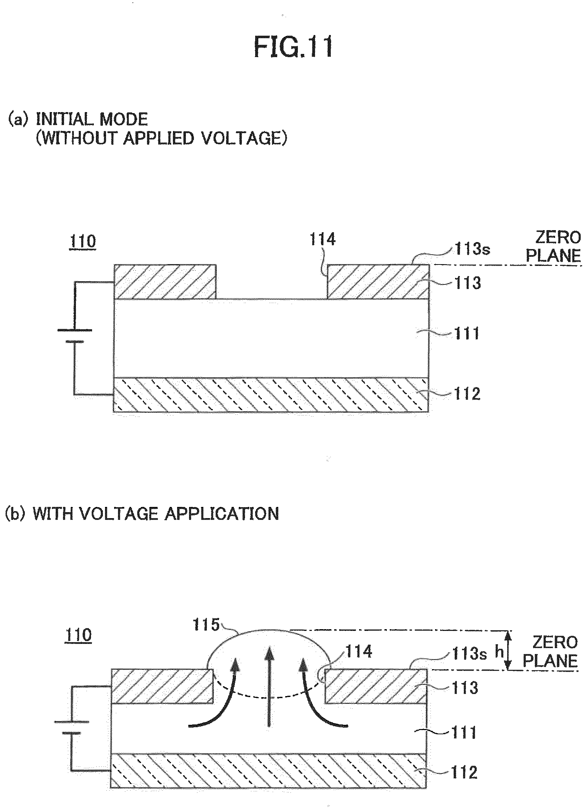

FIG. 11 schematically illustrates a sample 110 used to measure characteristics of the polymer material to which an ionic liquid is added. The diagram (a) of FIG. 11 shows the initial state without voltage application, and diagram (b) of FIG. 11 shows the state by applying a voltage.

In order to investigate various characteristics of the polymer material, a sample with a polymer layer 111 provided between electrodes 112 and 113 is prepared. A polymer gel in which PVC having a weight average molecular weight of 230,000 is dissolved in a solvent of tetrahydrofuran (THF) is prepared, and various ionic liquids are added to prepare multiple types of samples. For comparison, a sample with a polymer gel without ionic liquid being added is also prepared for the measurement of characteristics.

The prepared polymer gels of the embodiments and the comparative configuration are applied onto the electrode 112 serving as the bottom electrode to a thickness of 300 µm. Over the polymer gel, a thin metal film of a thickness of 30 µm in which apertures with a diameter of 100 µm are formed is provided as the top electrode 113. The voltage applied between the electrodes 112 and 113 is changed between 0 V and 400 V, and the peak height "h" of the light scatterer 15 protruding from the electrode 113 is measured. The "peak height" means the height from the surface 113s of the electrode 113. The electrode 112 is the cathode, and the electrode 113 is the anode.

In the optical device 10 of the embodiment, a light scatterer 15 is formed within a space by attracting the polymer gel toward the electrode by elastic deformation of the polymer gel by applying a voltage. The sample 110 is equivalent to the device of the embodiment in terms of the light scatterer 115 being formed the elastic deformation of the polymer by applying a voltage. The measurement results of the polymer gels prepared for the sample 110 of FIG. 11 can be applied to the configurations of FIG. 1 to FIG. 3 and FIG. 8.

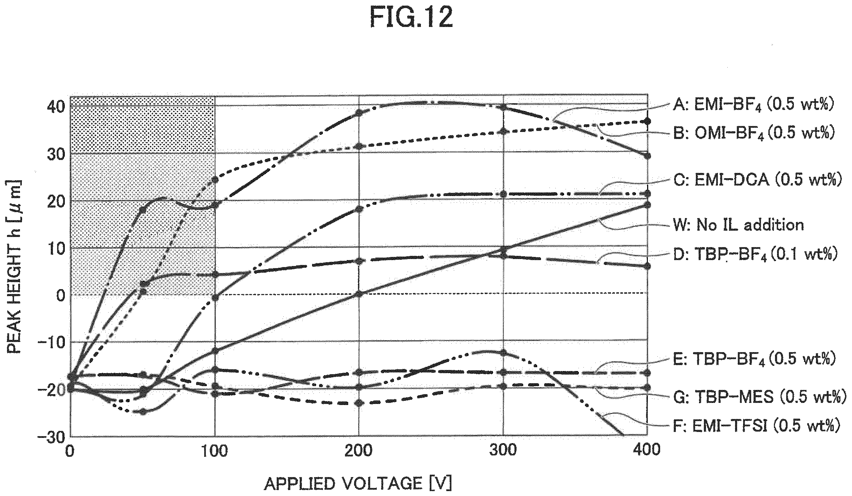

FIG. 12 shows applied voltage dependence of the protrusion height of polymer gels with various ionic liquids thereto. The dependence of peak height "h" is measured with increasing the applied voltage. As a comparative configuration, the voltage dependence of peak height of the polymer gel without ionic liquid is also measured.

Line A represents voltage dependence of peak height of sample A which contains 1-ethyl-3-methylimidazolium tetrafluoroborate (EMI-BF₄) as the ionic liquid. The weight ratio of EMI-BF₄ to PVC is 0.5 wt%. EMI is cation and BF₄ is anion.

Line B represents voltage dependence of peak height of sample B which contains 1-octyl-3-methylimidazolium tetrafluoroborate (OMI-BF4) as the ionic liquid. The weight ratio of OMI-BF4 to PVC is 0.5 wt%. OMI is cation and BF₄ is anion.

Line C represents voltage dependence of peak height of sample C which contains 1-ethyl-3-methylimidazolium dicyanamide (EMI-DCA) as the ionic liquid. The weight ratio of EMI-DCA to PVC is 0.5 wt%. EMI is cation and DCA (C₂N₃) is anion.

Line D represents voltage dependence of peak height of sample D which contains tetrabutylphosphonium tetrafluoroborate (TBP-BF₄) as the ionic liquid. The weight ratio of TBP-BF₄ to PVC is 0.1 wt%. TBP is cation and BF₄ is anion.

Line E represents voltage dependence of peak height of sample E which contains tetrabutylphosphonium tetrafluoroborate (TBP-BF4) as the ionic liquid. Although the same ionic liquid as sample D used, the weight ratio of TBP-BF4 to PVC is 0.5 wt% in sample E. TBP is cation and BF₄ is anion.

Line F represents voltage dependence of peak height of sample F which contains 1-ethyl-3-methylimidazolium trifluoromethanesulfonimide (EMI-TFSI) as the ionic liquid. The weight ratio of EMI-TFSI to PVC is 0.5 wt%. EMI is cation and TFSI is anion.

Line G represents voltage dependence of peak height of sample G which contains tetrabutylphosphonium methanesulfonic acid (TBP-MES) as the ionic liquid. The weight ratio of TBP-MES to PVC is 0.5 wt%. TBP is cation and MES is anion.

Line W represents voltage dependence of peak height of sample W which was prepared as the comparative configuration without containing ionic liquid.

From the measurement result of FIG. 12, even if no ionic liquid is added, the polymer gel deforms by applying a voltage due to generation of the charges as described in section [0044]. With sample W of the comparative configuration without ionic liquid, the height of the light scatterer 115 increases almost linearly with respect to the applied voltage. The sample W requires applied voltage of 400 V to be protruded from the surface 13s of the electrode 113 up to a height of 20 µm.

In contrast, sample A with 0.5 wt% EMI-BF₄ added as the ionic liquid, and sample B with 0.5 wt% OMI-BF₄ added are devoted the applied voltage of 100 V or less to cause the polymer layer 111 to protrude to a height of 20 µm or more. Particularly, the sample A can deform to a height of 20 µm by applying voltage of only 50 V, and to a height of nearly 40 µm by applying the voltage of 200 V. Sample B also deforms to a height of 25 µm at voltage amount of 100 V and to a height of 30 µm at voltage amount of 200 V.

Sample C with 0.5 wt% EMI-DCA achieves the same peak height of 20 µm by applying the voltage of about 210 V to 220 V, compared with sample W contained no ionic liquid. The results indicated that the consumption power for deformation of the polymer gel greatly decreased.

As for sample D with 0.1 wt% TBP-BF₄ added, the light scatterer 115 protrudes from the surface 13s of the electrode 113 by applying the voltage of 50 V. However, even though the applied voltage increased, the peak height remains less than 10 µm. The increasing rate in peak height is low even the range from 50 to 400 V. For sample D, it may be difficult to accurately adjust the height of the light scatterer 15 by voltage control.

Sample E with 0.5 wt% TBP-BF₄ added, Sample F with 0.5 wt% EMI-TFSI added, and Sample G with 0.5 wt% TBP-MES are not able to produce a light scatterer 115 over the surface 113s of the electrode 113 even if at applied the voltage of 400 V.

From the measurement results of FIG. 12, it is considered that at least one of the materials (namely, physical properties) and the amount of added ionic liquid is/are involved in reduction of the driving voltage for the polymer layer 111.

### <Relationship between Polymer Gel Deformation and Physical Properties of Ionic Liquids>

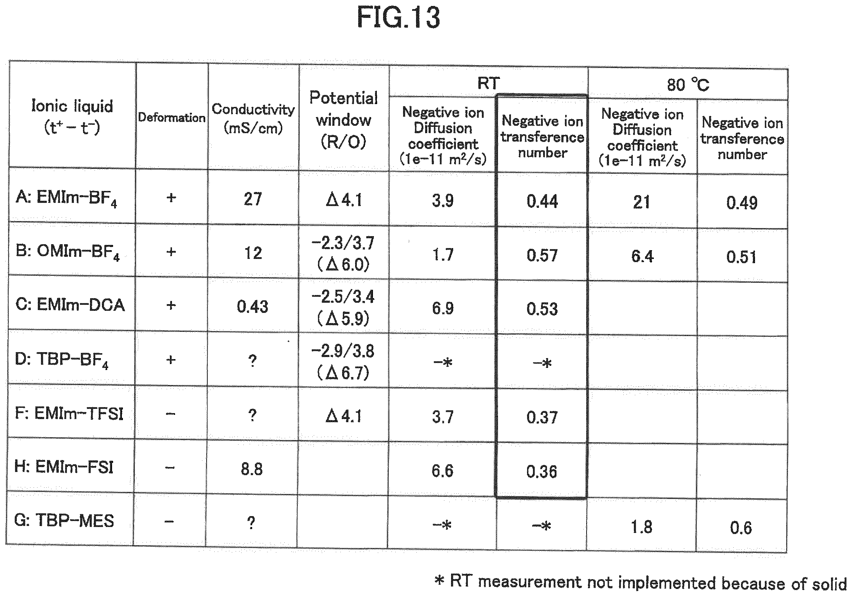

FIG. 13 illustrates the relationship between the deformation of the polymer gel and the physical properties of the ionic liquid. The physical properties of sample H with 1-ethyl-3-methylimidazolium fluorosulfonylimide (EMI-FSI) having been added as an ionic liquid is prepared and measured, in addition to samples A to G of FIG. 12.

Among samples A to H to which various ionic liquids have been added, those marked with a positive sign in the column of deformation indicate that the polymer gel protrudes from the surface 113s of the electrode 113 and forms a light scatterer 115 under application of voltage. Those marked with a negative sign indicate that the polymer gel does not protrude from the surface 113s of the electrode 113 even when a voltage is applied.

The physical properties of each ionic liquid to be measured include conductivity, size of the potential window, diffusion coefficient and the transference number of negative ions at 25°C. Since some of the ionic liquids used are solid at 25°C, the diffusion coefficient and the transference number of negative ions are measured at 80°C only for those melted at 80°C by heating.

Among the above-described parameters, conductivity is considered first. The conductivity of sample C is two-digits lower than that of samples A and B, but the polymer gel to which sample C is applied deforms in the positive direction. In contrast, sample H has a conductivity much higher than sample C, but the polymer gel does not deform in the positive direction. It may be considered that the conductivity of the ionic liquid is not directly related to the deformation efficiency of polymer gels.

Potential window represents a potential region in which electrochemical stability is maintained in the system of FIG. 2. The wider the potential window (or the greater the value), the broader the electrochemically stable range of the system. Although the potential windows of sample A and sample F have the same width, the polymer gel of sample A deforms positively, while the polymer gel of sample F does not deform positively. It may also be considered that the width of the potential window of the ionic liquid is not directly related to the deformation efficiency of the polymer gel.

Next, diffusion coefficient and transference number of anion (negative ion) at 25°C are discussed. The diffusion coefficients of positive ions and negative ions contained in ionic liquid are measured by solid-state nuclear magnetic resonance (NMR) using a VNMR System manufactured by Varian Medical Systems, Inc. as the measuring instrument. The measurement procedure is to inject the ionic liquid into the capillary and set it in the equipment. The signal intensity with respect to the change in the magnetic field is measured at predetermined temperatures (25°C and 80°C in this experiment). Then, the diffusion coefficients of positive ions and negative ions are calculated from the Stokes-Einstein equation.

The transference number of negative ions represents the ratio of electric current carried by anions to the total current when an electric current is applied to the ionic liquid. The transference number of the negative ions is calculated as Dₐₙᵢₒₙ/ (D_{cation}+Dₐₙᵢₒₙ), which is a ratio of the negative ion diffusion coefficient to the sum of the negative ion diffusion coefficient and the positive ion diffusion coefficient obtained above.

The ionic liquids used in samples A, B, C, F, and H are in the liquid phase at 25°C, and the diffusion coefficient and the transference number of negative ions of each ionic liquid are calculated from the measurement results of liquid chromatography. For samples A, B, and C with positive deformation observed, the negative ion transference numbers of the ionic liquids at 25°C are all 0.4 or more. On the other hand, the negative ion transference number at 25°C of the ionic liquids used in samples F and H, which do not exhibit positive deformation, is less than 0.4. From this, it may be considered that the transference number of the negative ion at room temperature contributes to the deformation of the polymer gel.

Since ionic liquid TBP-BF₄ added to sample D with positive deformation observed does not melt at the maximum heater temperature (80°C) of the liquid chromatograph, the diffusion coefficient cannot be measured.

Ionic liquid TBP-MES added to sample G, which does not exhibit positive deformation, is also solid at 25°C, and the diffusion coefficient cannot be measured. By heating this ionic liquid to 80°C, it melts and accordingly, the diffusion coefficient and the transference number of negative ions were calculated. The obtained negative ion transference number is 0.6.

It is understood from the results of FIG. 13 that it is desirable for the ionic liquid added to the polymer layer 11 to have a negative ion transference number of 0.4 or greater at 25°C.

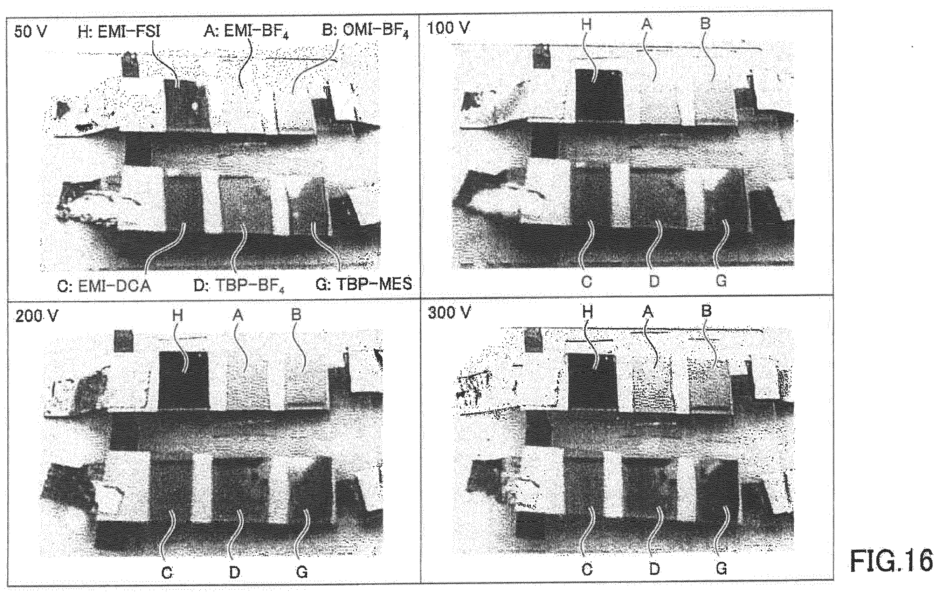

Based upon FIG. 12 and FIG. 13, it may be assumed that an ionic liquid containing anions with a smaller size (molecular weight) contributes to the deformation efficiency of the polymer gel. Meanwhile, it may be considered that the size of cations in the ionic liquid does not significantly contribute to the deformation efficiency. However, because the deformation efficiency of sample D is insufficient, the cation type could affect the deterioration of the cathode. This will be described later with reference to FIG. 16.

The ionic liquid used in sample G has a medium anion size and a medium cation size. However, since the ionic liquid is a solid at 25°C, it may be considered that this ionic liquid is not so contributable to the deformation efficiency of the gel even though the ionic liquid is dispersed by stirring in the polymer gel.

From the above, in addition to BF₄⁻ and DCA, Cl⁻ or Br⁻ having a relatively small ion-size may be used as the anion. Various ionic liquids can be used by appropriately selecting cations that do not affect the deterioration of the cathode. For example, Li-BF₄ may be used as the ionic liquid.

### <Relationship between Quantity of Ionic Liquid and Deformation of polymer Gel>

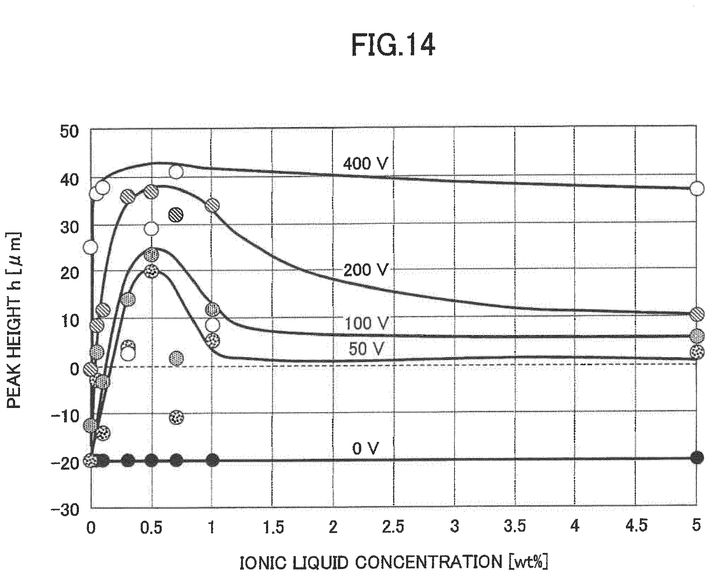

FIG. 14 illustrates the relationship between the quantity of ionic liquid added and the deformation of the polymer gel. The horizontal axis represents the concentration (wt%) of the ionic liquid in the polymer material of the gel, and the vertical axis represents the peak height of the deformation.

PVC having a molecular weight of 230,000 is used as the polymer material, and EMI-BF₄ of sample A is used as the ionic liquid. The quantity of EMI-BF₄ added is changed in the range from 0 wt% to 5.0 wt%. The applied voltage is also changed from 0 V to 50 V, 100 V, 200 V, and 400 V.

Positive deformation can be obtained in the range from 0.2 wt% to 1.5 wt% of the ionic liquid added, regardless of the amount of the applied voltage. Further, the deformation becomes the maximum in the range from 0.3 wt% to 1.0 wt%. By adding the ionic liquid in this range, the light scatterer 15 can be formed on the surface of the electrode 13 at the applied voltage of 100 V or below.

It can be seen from FIG. 14 that the weight ratio of the ionic liquid to the polymer is preferably from 0.2 wt% to 1.5 wt%, and more preferably from 0.3 wt% to 1.0 wt%. This matches the result of FIG. 12.

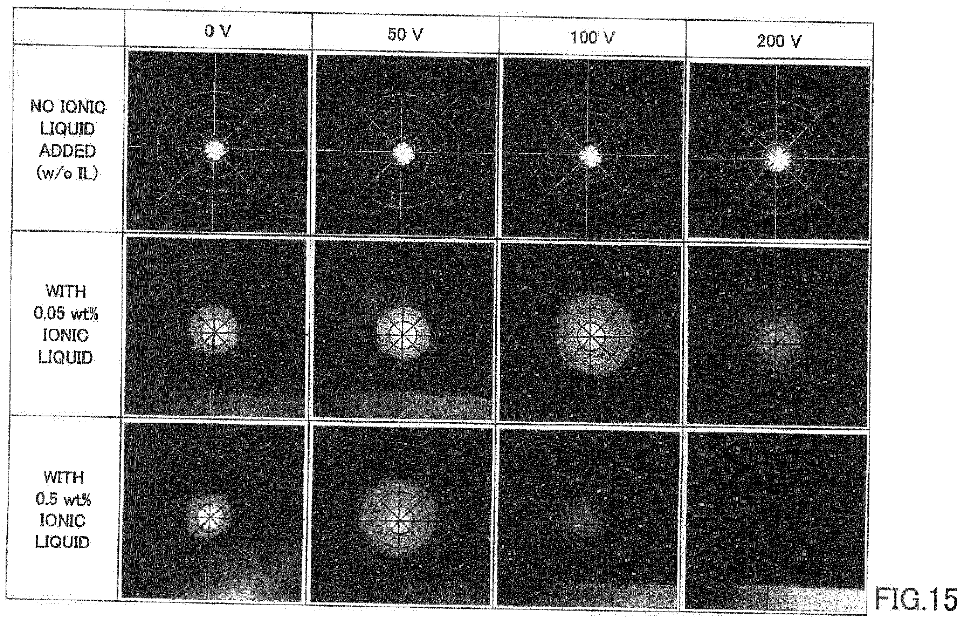

FIG. 15 is a diagram showing evaluation results of the light diffusion distributions of light scatterers 115 formed by applying different voltages to the polymer layer 111, at different quantities of an ionic liquid added. Using EMI-BF₄ as the ionic liquid, the optical device 10 of FIG. 2 is fabricated using the polymer layer 11 by changing the quantity of EMI-BF₄ added. The polymer layer 11 contains PVC as a polymer gel and dibutyl adipate (DBA) as a plasticizer. The content ratio of DBA to the total amount of PVC and DBA is 83 wt%.

The electrode 112 serving as the cathode is formed of ITO film with a thickness of 150 nm, and a voltage is applied to the polymer layer 111 provided between the electrodes 112 and 113 to form a light scatterer 115. A laser source is provided at the side of the ITO electrode 112, and a screen is provided at the side of light scatterer 115 to be produced. A laser beam of red parallel light is incident on the sample 110 from the back face of the electrode 112, and the light diffusion state is observed on the screen.

The screen is positioned in the light emitting direction of the light scatterer 115, beyond the focal point of the light scatterer 115. The light diffusion of the light scatterer 115 is observed on the screen after the emitted light has been focused at the focal point. The light-scatterer 15 of the optical device 10 is very small with a diameter of 100 µm and a height of about 0 µm to 40 µm, therefore the focal position is too close to the light scatterer 115 to observe with the naked eye. By observing the light diffusion on a plane beyond the focal point of the light scatterer 115, the focusing state can be estimated.

With the sample to which no ionic liquid is added (denoted as "w/o IL" in the figure), the light scatterer 115 is not formed so as to protrude from the surface of the electrode 113 even at 200 V applied. The red parallel light incident on the back surface of the sample 110 passes as the parallel light through the sample 110 without being focused, and a light spot of the same size as the light beam cross section is formed on the screen, regardless of the amount of the applied voltage.

With the sample to which 0.05 wt% EMI-BF₄ has been added, the polymer gel slightly protrudes from the surface of the electrode 113 by applying a voltage of 100 V, but the light condensing function is insufficient and a spot of almost parallel light is observed at the screen position. By applying a voltage of 200 V, the light scatterer 115 with a peak height of about 10 µm (whose curvature is gentle) is formed. The light once focused at the focal point of the light scatterer 15 is then diffused and spread. No light spot appears on the screen.

With the sample to which 0.5 wt% EMI-BF₄ has been added, a light scatterer 115 is formed on the surface of the electrode 113 at applied voltage of 50 V. The light first focused and then diffusing is observed at the screen position. Under the applied voltage of 100 V and 200 V, a light scatterer 115 is formed on the surface of the electrode 113, whose peak height is higher than that obtained at 50 V with a sharp curvature. The light incident on the sample 110 from the rear side is greatly diffused after having been focused, and no light spot is observed at the screen position. These evaluation results agree with the measurement results of FIG. 14.

From the light diffusion distribution of FIG. 15, it is confirmed that the focal length of the light scatterer 115 can be varied by adjusting the applied voltage. Applying the measurement results to the optical devices 10A and 10B, as well as to the microlens array 100 of the embodiment, light scatterer(s) 115 can be formed at a lower voltage, and a variable focus lens or a variable shape lens with improved deformation efficiency can be achieved.

### <Influence of Ionic Liquid (Cation) on Cathode Deterioration>

FIG. 16 shows influence of the ionic liquid on the cathode deterioration. As test samples, PVC gels to which various ionic liquids are applied onto a metal substrate, and an ITO electrode is provided as a counter electrode over the PVC gels.

Six types of PVC gels are prepared, sample A (containing 0.5 wt% EMI-BF₄), sample B (containing 0.5 wt% OMI-BF₄), sample C (containing 0.5 wt% EMI-DCA), sample D (containing 0.1 wt% TBP-BF4), sample H (containing 0.5 wt% EMI-FSI), and sample G (0.5 wt% TBP-MES). Among these, samples that exhibit positive deformation in FIG. 13 are samples A to D. Sample D contains a reduced amount of ionic liquid of 0.1 wt% because deformation does not occur when the same weight ratio (0.5 wt%) of the ionic liquid as other samples is added.

Using the metal substrate as an anode electrode and ITO as a cathode electrode, the surface state of the electrode is observed from the ITO side while changing the voltage amount applied to the PVC gel.

In sample G which does not show the deformation effect, deterioration of ITO film(cathode) was observed at a low voltage of 50 V. In sample D, again deterioration of the ITO electrode due to voltage application is observed. It may be considered that the cation contributes to the deterioration of the ITO electrode. In contrast, in samples A to C which have sufficient deformation effect, deterioration of the ITO electrode is not observed even when the applied voltage is increased.

From the discussion of FIG. 11 to FIG. 16, by adding an ionic liquid with a negative ion transference number of 0.4 or more at 25°C, greater deformation is achieved at a lower voltage, as compared with a polymer gel with no ionic liquid added. In particular, when an ionic liquid with a small anion size is used as in sample A and sample B, the peak height can be greatly changed in the voltage range of 100 V and below, and control on the light scatterer 15 becomes easy. In accordance with the applied voltage amount, the light scatterer 15 can be produced in the space and its height can be adjusted. These samples had little the deterioration on the cathode by driving the optical device 10A or 10B.

The polymer material with an ionic liquid added can be applied to the microlens array 100 of FIG. 3. In this case, by applying a voltage of 200 V or lower between the electrodes 12A and 14A, an array of light scatterers 15 are formed in the spaces 17. Depending on the type of ionic liquid to be added, an array of light scatterers 15 with a height of 20 µm or higher can be produced by applying a voltage of 100 V or below.

Although the invention has been described based upon the specific embodiments, the present invention is not limited to the above-described configurations. In the microlens array 100, the layout of the light scatterers 15 is not limited to a matrix or rectangular in-line arrangement, and a staggered pattern may be employed. The plane shape of the apertures 16 (or 143) in the spacer layer 13A may be hexagonal with a close-packed layout may be employed.

This application is based upon and claims the priorities of the earlier Japanese Patent application No. 2017-254352 filed December 28, 2017 and Japanese Patent Application No. 2018-243599 filed December 26, 2018, and the entire contents of which are herein incorporated.

### LIST OF SYMBOLS

- 10A, 10B: optical device
- 11, 111: polymer layer
- 12, 12A, 12B: first electrode layer
- 13, 13A,13B: spacer layer
- 14, 14A, 14B: second electrode layer
- 141: main surface
- 143: aperture
- 145: bottom
- 15, 115: light scatterer
- 16: aperture
- 17: space
- 19A, 19B: electrode assembly
- 21: substrate
- 100: microlens array
- 110: sample
- 112, 113: electrode
- 130: image sensor array
- 131R, 131G, 131B: color filter
- 150: imaging apparatus
- 250: lighting equipment

## Claims

1. An optical device comprising:
a first electrode layer;
a second electrode layer;
a polymer layer provided between the first electrode layer and the second electrode layer; and
a spacer layer positioned between the polymer layer and the second electrode layer to provide a prescribed space between the polymer layer and the second electrode layer, the spacer layer being an electrical insulator,
wherein the polymer layer deforms into one or more light scatterers in the prescribed space by applying a voltage.

2. The optical device as claimed in claim 1,
wherein the spacer layer is an insulating film having one or more apertures, and
wherein each of said one or more light scatterers is formed in a corresponding aperture of said one or more apertures by applying the voltage.

3. The optical device as claimed in claim 1,
wherein the second electrode layer has one or more apertures formed in a main surface that faces the polymer layer,
wherein at a main surface side, the spacer layer covers an entire area except for bottoms of said one or more apertures, and
wherein each of said one or more light scatterers is formed in a corresponding aperture of said one or more apertures under the application of the voltage.

4. The optical device as claimed in any one of claims 1 to 3,
wherein said one or more light scatterers have protrusion shapes.

5. The optical device as claimed in any one of claims 1 to 4,
wherein the second electrode layer is an anode layer, and the first electrode layer is a cathode layer.

6. The optical device as claimed in any one of claims 1 to 5, wherein the second electrode layer is a transparent electrode layer.

7. The optical device as claimed in any one of claims 1 to 6,
wherein the polymer layer is formed of a gelatinous material to which an ionic liquid is added, the ionic liquid having a negative ion transference number greater than or equal to 0.4 at 25°C.

8. A microlens array comprising:
a first electrode layer;
a second electrode layer;
a polymer layer provided between the first electrode layer and the second electrode layer; and
a spacer layer positioned between the polymer layer and the second electrode layer to provide a prescribed space between the polymer layer and the second electrode layer, the spacer layer being an electrical insulator,
wherein the microlens array has an array of light scatterers on a surface of the second electrode layer under application of a voltage.

9. The microlens array as claimed in claim 8, wherein the polymer layer is formed of a gelatinous material to which an ionic liquid is added, the ionic liquid having a negative ion transference number greater than or equal to 0.4 at 25°C.

10. An imaging apparatus comprising:
the microlens array as claimed in claim 8 or 9; and
an image sensor array provided facing the microlens array.

11. A lighting equipment comprising:
the microlens array as claimed in claim 8 or 9; and
a light source.

12. A method of fabricating an optical device comprising:
providing a polymer layer on a first electrode layer;
providing a spacer layer and a second electrode layer on or above the polymer layer so as to provide a space between the polymer layer and the second electrode layer, the spacer layer being an electrical insulator; and
applying a voltage between the first electrode layer and the second electrode layer to produce one or more light scatterers in the space by deforming the polymer layer.

13. The method as claimed in claim 12, comprising:
forming an electrode assembly in which the spacer layer having one or more apertures and the second electrode layer are bonded to each other; and
providing the electrode assembly on the polymer layer.

14. The method as claimed in claim 12, comprising:
forming one or more apertures on a main surface of the second electrode layer;
at the main surface of the second electrode layer, forming the spacer layer that covers an entire area except for bottoms of the apertures for producing an electrode assembly; and
providing the electrode assembly on the polymer layer such that the main surface and the polymer layer face each other.

15. The method as claimed in any one of claims 12 to 14,
wherein the polymer layer is formed of a gelatinous material to which an ionic liquid is added, the ionic liquid having a negative ion transference number greater than or equal to 0.4 at 25°C.
